# EUROPEAN PATENT APPLICATION

(11) **EP 2 061 129 A1**
(43) Date of publication of application: **20.05.2009**
(21) Application number: 07120802.9
(22) Date of filing: 15.11.2007
(51) Int. Cl.: H02J 7/00

(54) **Battery power management method and apparatus for controlling high-temperature condition**

(71) Applicant: Kuo, Hsien-Yuan, Banciao City (TW)
(72) Inventor: Kuo, Hsien-Yuan, Banciao City (TW)
(74) Representative: Epping - Hermann - Fischer

(57) **Abstract**

A battery power management method and apparatus (100) applicable to a battery unit (10) for managing and controlling high-temperature conditions of the battery unit (10) are provided. The method and the apparatus (100) of the invention characterize in that if the current operating temperature of a battery unit (10) is detected to be higher than a predetermined upper limit threshold value, the circuit power source switch is turned on to detect a battery voltage value of the battery unit (10); and if the detected battery voltage value exceeds a predetermined upper limit threshold voltage value, a discharge circuit is actuated to execute a discharge operation, thereby allowing the battery unit (10) to be maintained and to have more stable characteristics and operation under high-temperature conditions.

## Description

### FIELD OF INVENTION

The present invention is related to battery power management techniques, and more particularly, to a power management method and an apparatus capable of managing high-temperature conditions of a battery unit, such as a lithium ion (Li-ion) battery unit.

### BACKGROUND OF THE INVENTION

A lithium ion (Li-ion) battery is a rechargeable battery commonly and widely applied in various types of portable and battery-powered electronic devices for supplying electric power to the devices, for operation, particularly mobile information apparatuses such as digital cameras, mobile phones, portable audio/media players, personal digital assistants (PDA) and so on. A lithium battery has the advantages of having a large capacity in terms of required size, free from the so-called "memory effect" in terms of capacity, and an extremely low leakage current when not in use.

However, one inherent characteristic and drawback of using a lithium battery is that it is prone to instability when operated or maintained under high-temperature conditions, often causing irregularities and variations in the output voltage and adversely affecting the overall performance of the powered device. Moreover, further concerns about safety, capacity deterioration, and even size expansion exist when operating or maintaining lithium batteries under high-temperature conditions.

### SUMMARY OF THE INVENTION

In view of the drawbacks of the prior art, a primary objective of the present invention is to provide an effective power management method and an apparatus capable of managing and controlling high-temperature conditions of a battery unit, thereby enhancing the ability to provide improved operation when operated or stored under high-temperature conditions.

The power management method capable of controlling high-temperature conditions of a battery unit of the invention includes the steps of: a) detecting a temperature of a current operating environment; b) comparing and determining whether the detected operating temperature exceeds a predetermined upper limit threshold temperature value; c) switching the circuit power source switch to a closed-circuit status to enable the battery unit to output power via the circuit power source switch if the detected temperature has exceeded the upper limit threshold temperature value; d) detecting a battery voltage value of the battery unit when the battery unit outputs power via the circuit power source switch; e) comparing and determining whether the detected battery voltage value of the battery unit exceeds a predetermined upper limit threshold voltage value; and f) executing a discharge process if the detected battery voltage value exceeds the predetermined upper limit threshold voltage value.

In the physical configuration, the power management apparatus capable of controlling high-temperature conditions of the invention at least is comprised of: a temperature-detecting module for detecting a temperature of a current operating environment of a battery unit; a temperature-comparing module for comparing and determining whether the detected operating temperature exceeds a predetermined upper limit threshold temperature value, whereby a switching actuation signal is sent if the detected temperature exceeds the predetermined upper limit threshold value; a switch control module for responding to the switching actuation signal sent by the temperature-comparing module to switch the circuit power source switch to a closed-circuit status, and enable the battery unit to output power via the circuit power source switch; a battery voltage detecting module for detecting a battery voltage value of the battery unit when the battery unit outputs power via the circuit power source switch; a battery voltage comparing module configured to compare and determine whether the detected battery voltage value of the battery unit exceeds a predetermined upper limit threshold voltage value, wherein a discharge circuit actuation signal is sent if the detected battery voltage value exceeds the upper limit threshold voltage value, or, if not, a discharge circuit prohibition signal is sent; and a discharge circuit module connected to the battery unit and capable of responding to the discharge circuit actuation signal sent by the battery voltage comparing module to actuate the battery unit for a discharge process, and further responding to the discharge circuit prohibition signal to disable or end the discharge operation.

In conclusion, the technical feature of the battery power management method and the apparatus for controlling high-temperature conditions, as disclosed by the invention, lies in that if a lithium battery is detected to operate in a temperature that exceeds a predetermined upper limit threshold temperature value, the circuit power source switch of the battery unit is actuated to detect a battery voltage value; and if the detected battery voltage value exceeds a predetermined upper limit threshold voltage value, a discharge circuit is switched on to execute a discharge operation of the battery unit. This unique characteristic allows the battery unit to be maintained and to have a more stable operation under high-temperature conditions, thereby reducing defection of the battery unit while optimizing the use life and capacity of the battery unit.

### BRIEF DESCRIPTION OF THE DRAWINGS

The invention can be more carefully understood by reading the following detailed description of the preferred embodiments, with reference made to accompanying drawings, wherein:
FIG. 1 is a simplified schematic diagram showing an application of the battery power management apparatus capable of controlling high-temperature conditions, of the invention, being applied to a battery unit; and
FIG. 2 is a detailed schematic diagram showing the basic inner architecture of the battery power management apparatus capable of controlling high-temperature conditions, of the invention.

### DETAILED DESCRIPTION OF THE PREFERRED EMBODIMENTS

The following embodiments are provided to illustrate the present invention. Persons having ordinary skills in the art can easily appreciate technical feature and the achieved functions of the present invention.

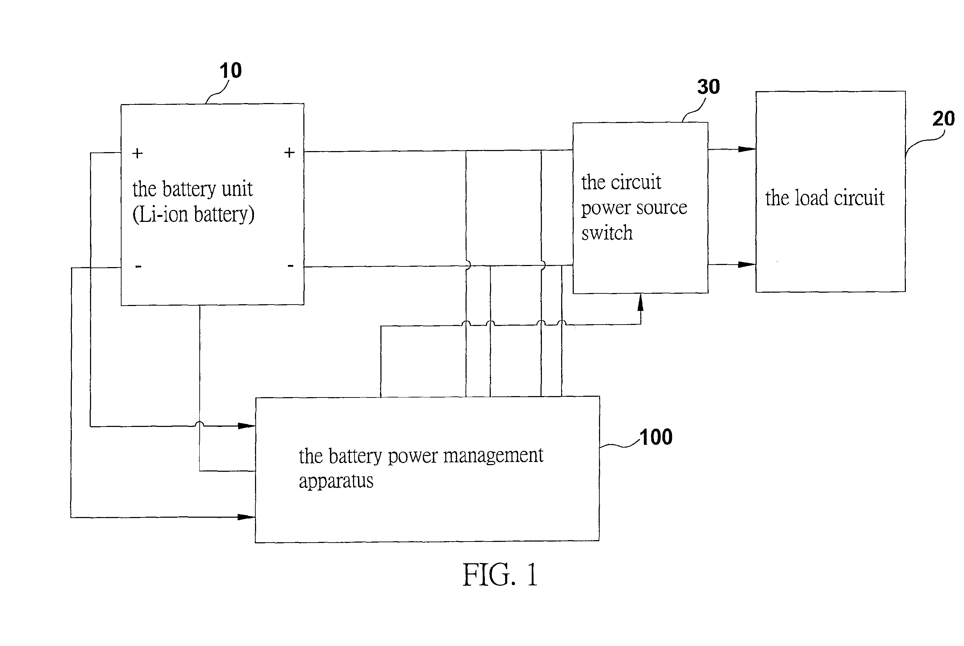

FIG. 1 shows an application of the battery power management apparatus (i.e., the block assigned the reference numeral 100) for controlling high-temperature conditions of a battery unit in accordance with the present invention. As shown in FIG. 1, the battery power management apparatus 100 is applied to a battery unit 10, which could specifically be a rechargeable battery unit such as a Li-ion battery for supplying power to portable electronic devices including (such as a digital camera, a cellular phone, a portable audio player, a personal digital assistant (PDA)). In a practical application, the battery power management apparatus 100 provides a function to manage high-temperature conditions, to allow the Li-ion battery 10 to have more stable operating characteristic when operated or maintained under high-temperature conditions. In a preferred embodiment, the battery power management apparatus 100 may be integrated and built into the Li-ion battery unit 10 or the inner circuit (not shown) of a portable electronic device as described above.

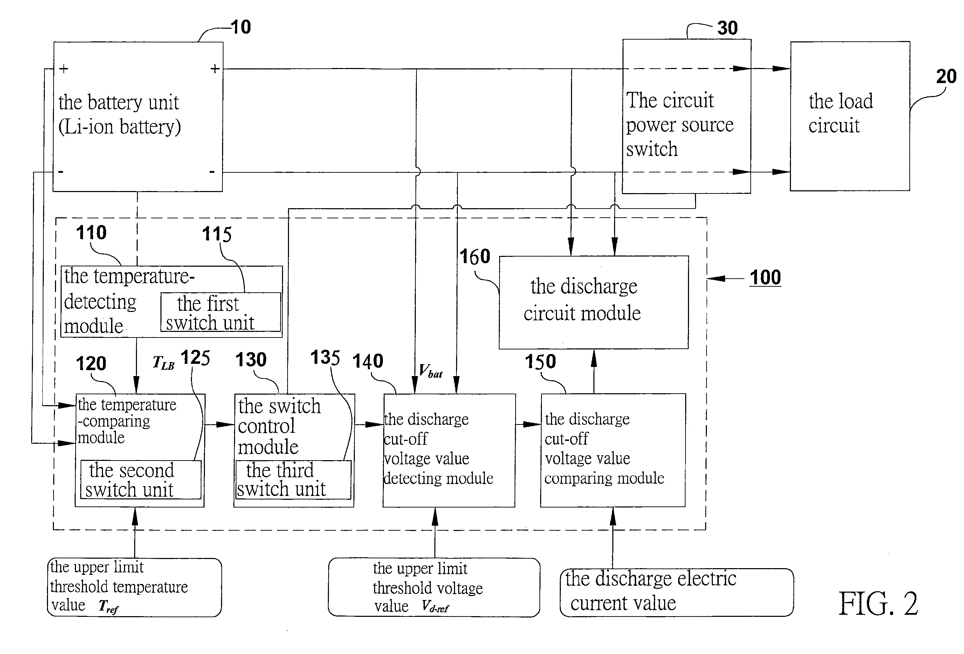

As shown in FIG. 2, the basic inner structure of the battery power management apparatus 100 of the invention comprises: a temperature-detecting module 110; a temperature-comparing module 120; a switch control module 130; a battery voltage value detecting module 140; a battery voltage value comparing module 150; and a discharge circuit module 160. The property and function of these constituting modules are respectively discussed below.

The temperature-detecting module 110 may be a thermistor for detecting a temperature of a current operating environment of the battery unit, and responding by outputting an electric current or a voltage signal, proportional to the temperature value, as a battery operating temperature signal *T_{LB}*. The battery operating temperature signal *T_{LB}* can be directly in the form of a raw analog or further converted into a temperature signal in a digital form.

Preferably, the temperature-detecting module 110 further comprises a first switch unit 115 for enabling or disabling operation of the temperature-detecting module 110. More specifically, if the first switch unit 115 is enabled, the temperature-detecting module 110 detects a temperature of a current operating environment, and responds by outputting an electric current or voltage signal, proportional to the temperature value, as a battery operating temperature signal *T_{LB}*. Conversely, if the first switch unit 115 is disabled, the temperature-detecting module 110 ends detecting the temperature of the current operating environment as well as the subsequent operation, in order to reduce consumption of power in operation. It should be noted that the first switch unit 115 may be optionally built into the temperature-detecting module 110, and a user may decide whether to activate the temperature-detecting module 110 in accordance with the temperature used.

The temperature-comparing module 120 may be an analog-type or a digital-type comparator for comparing and determining whether the battery operating temperature *T_{LB}* detected by the temperature-detecting module 110 exceeds a predetermined upper limit threshold value *T_{ref}*, wherein if the detected temperature exceeds the predetermined upper limit threshold value, a switching actuation signal is sent to the switch control module 130, and if not, no actions will be taken (i.e., no switching actuation signal is sent). In a practical application, the temperature-detecting module 110 comprises a manually controlled setting function for allowing a user to set the upper limit threshold value *T_{ref}*, so that manufacturers could set *T_{ref}* in accordance with the actual product specifications and application conditions. For instance, if the temperature-comparing module 120 is an analog-type comparator, a thermistor may be employed to adjust *T_{ref}*.

Preferably, the temperature-comparing module 120 further comprises a second switch unit 125 for enabling or disabling a connection among the battery unit 10, the switch control module 130, the battery voltage value detecting module 140, the battery voltage value comparing module 150 and the discharge circuit module 160. More specifically, if the temperature-comparing module 120 determines that *T_{LB}* detected by the temperature-detecting module 110 exceeds *T_{ref}*, the second switch unit 125 is configured to be in a closed-circuit state, thereby allowing the battery unit 10 to be electrically conducted to the switch control module 130, the battery voltage value detecting module 140, the battery voltage value comparing module 150 and the discharge circuit module 160 for operation via the second switch unit 125. On the contrary, if the temperature-comparing module 120 determines that *T_{LB}* detected by the temperature-detecting module 110 does not exceed *T_{ref}*, the second switch unit 125 is set to be in a open-circuit state, thereby allowing the battery unit 10 to be electrically disconnected from the switch control module 130, the battery voltage value detecting module 140, the battery voltage value comparing module 150 and the discharge circuit module 160 via the second switch unit 125, to reduce power consumption in a stand-by mode.

The switch control module 130 responds to the switching actuation signal sent by the temperature-comparing module 120 to switch the circuit power source switch 30 to a closed-circuit status and enabling the battery unit 10 to output power to a load circuit 20 via the circuit power source switch 30. It should be noted that the switch control module 130 may be optionally built into the temperature-detecting module 110, and preferably comprises a third switch unit 135 for allowing the user to determine whether the temperature-detecting module 110 should be activated.

The battery voltage value-detecting module 140 detects a battery voltage (hereinafter referred to as *V_{bat}*) when the Liion battery 10 is activated to output power by the circuit power source switch 30 of the switch control module 130. The battery voltage value comparing module 150 may be an analog-type or a digital-type comparator for comparing and determining whether *V_{bat}* exceeds a predetermined upper limit threshold voltage value *V_{d-ref}*, and if *V_{bat}* does not exceed *V_{dref}* (i.e., being equal to or smaller than *V_{d-ref}*), a discharge circuit prohibition signal is sent to the discharge circuit module 160; and if yes, a discharge circuit actuation signal is sent to the discharge circuit module 160. In a practical application, the battery voltage value comparing module 150 comprises a manually-controlled setting function for allowing a user to set *V_{d-ref}*.

The discharge circuit module 160 is connected to the battery unit 10 and capable of responding to the discharge circuit actuation signal sent by the battery voltage value-comparing module 150, to actuate the battery unit 10 for discharging electricity, and further responding to the discharge circuit prohibition signal to disable the discharge operation. In a practical application, the discharge circuit module 160 comprises a manually-controlled setting function for allowing a user to set the discharge voltage value as required according to the actual application and usage conditions.

An example is exemplified below to describe an overall operative mode of the battery power management apparatus 100 of the invention.

During operation, the first switch unit 115 is built in the battery power management apparatus 100, and the user may decide to actuate the battery power management apparatus 100 in accordance with the temperature used. The battery power management apparatus 100 is actuated to continuously detect the current operating temperature, and respond by outputting an electrical current or a voltage signal, proportional to the temperature value, as *T_{LB}.* The temperature-comparing module 120 compares and determines whether *T_{LB}* detected by the temperature-detecting module 110 exceeds *T_{ref}*; and if *T_{LB}* exceeds *T_{ref}*, a switching actuation signal is sent to the second switch unit 125; and if not (i.e., the battery unit 10 is operating under normal conditions), no switching actuation signal will be sent to the switch control module 130. The battery voltage value-detecting module 140 is actuated to detect *Vbat*, after the battery unit 10 is activated to output power by the circuit power source switch 30 of the switch control module 130. The battery voltage comparing module 150 is configured to compare and determine whether or not the detected *V_{bat}* exceeds *V_{d-ref}*; if *V_{bat}* does not exceed *V_{d-ref}*
(i.e., *V_{bat}* is equal to or smaller than *V_{d-ref}*), a discharge circuit prohibition signal is sent to the discharge circuit module 160; and if no, a discharge circuit actuation signal is sent to the discharge circuit module 160 to actuate a discharge operation, thereby assuring a stable operation when operated and maintained in high-temperature conditions.

In conclusion, the invention provides a battery power management method and an apparatus, which is applicable to a battery unit, for managing and controlling high-temperature conditions of the battery unit. The technical feature of the method and the apparatus lies in that if a battery is detected to operate in a temperature that exceeds a predetermined upper limit threshold temperature value, the circuit power source switch of the battery unit is actuated to detect a battery voltage value; and if the detected battery voltage value exceeds a predetermined upper limit threshold voltage value, a discharge circuit is switched on to execute a discharge operation of the battery unit. This unique characteristic allows the battery unit to be maintained and to have a more stable operation under high-temperature conditions. The invention inventive and practical compared with prior art.

The invention has been described using exemplary preferred embodiments. However, it is to be understood that the scope of the invention is not limited to the disclosed arrangements. The scope of the claims, therefore, should be accorded the broadest interpretation so as to encompass all such modifications and similar arrangements.

## Claims

1. A battery power management method applicable to a battery unit, the battery unit being capable of outputting power to a load circuit, for managing and controlling high-temperature conditions of the battery unit, the battery power management method comprising the steps of:
a) detecting a temperature of a current operating environment of the battery;
b) comparing and determining whether the detected temperature exceeds a predetermined upper limit threshold temperature value;
c) switching a circuit power source switch to a closed-circuit status to enable the battery unit to output power to the load circuit via the circuit power source switch when the detected temperature has exceeded the upper limit threshold temperature value;
d) detecting a battery voltage value of the battery unit when the battery unit outputs power via the circuit power source switch;
e) comparing and determining whether the detected battery voltage value of the battery unit exceeds a predetermined upper limit threshold voltage value; and
f) executing a discharge process if the detected battery voltage value exceeds the predetermined upper limit threshold voltage value.

2. The battery power management method as claimed in claim 1, wherein the battery unit is a lithium ion (Li-ion) battery.

3. The battery power management method as claimed in claim 1, wherein the battery unit further outputs power to the load circuit via the circuit power source switch.

4. The battery power management method as claimed in claim 3, wherein in step d) the circuit power source switch may be selectively switched to a closed-circuit state to enable the battery unit to output power to the load circuit via the circuit power source switch.

5. A battery power management apparatus applicable to a battery unit, the battery unit capable of outputting power to a load circuit, for managing high-temperature conditions of the battery unit, the apparatus at least comprising:
a temperature-detecting module for detecting a temperature of a current operating environment of the battery unit;
a temperature-comparing module for comparing and determining whether or not the detected operating temperature exceeds a predetermined upper limit threshold temperature value, whereby if the detected temperature exceeds the predetermined upper limit threshold value, a switching actuation signal is sent;
a switch control module for responding to the switching actuation signal sent by the temperature-comparing module to switch a circuit power source switch to a closed-circuit status and enable the battery unit to output power via the circuit power source switch;
a battery voltage value detecting module for detecting a battery voltage value of the battery unit when the battery unit outputs power via the circuit power source switch;
a battery voltage value comparing module configured to compare and determine whether the detected battery voltage value of the battery unit exceeds a predetermined upper limit threshold voltage value, wherein a discharge circuit actuation signal is sent if the detected battery voltage value exceeds the upper limit threshold voltage value, and if not, a discharge circuit prohibition signal is sent; and
a discharge circuit module connected to the battery unit and capable of responding to the discharge circuit actuation signal sent by the battery voltage comparing module to actuate the battery unit for a discharge process, and further responding to the discharge circuit prohibition signal to disable or cease the discharge process.

6. The battery power management apparatus as claimed in claim 5, wherein the battery unit is a lithium ion (Li-ion) battery.

7. The battery power management apparatus as claimed in claim 5, wherein the temperature-detecting module is a thermistor.

8. The battery power management apparatus as claimed in claim 5, wherein the temperature-detecting module is of a manually-controlled setting function for allowing a user to set the upper limit threshold temperature value.

9. The battery power management apparatus as claimed in claim 5, wherein the battery voltage value detecting module is of a manually-controlled setting function for allowing a user to set the battery voltage value.

10. The battery power management apparatus as claimed in claim 5, wherein the discharge circuit module is of a manually-controlled setting function for allowing a user to set the discharge current value.

11. The battery power management apparatus as claimed in claim 5, wherein the temperature-detecting module further comprises a switch unit for starting or ending operation of the temperature-detecting module.

12. The battery power management apparatus as claimed in claim 5, wherein the temperature-detecting module further comprises a switch unit for opening or closing the circuit supplying power between the battery unit and the switch control module, the battery voltage value detecting module, the battery voltage value comparing module, and the discharge circuit module.

13. The battery power management apparatus as claimed in claim 5, further comprising a switch control module for responding to the switching actuation signal sent by the temperature-comparing module to switch a circuit power source switch of the battery unit for outputting power to a load circuit, to a closed-circuit status to output power via the circuit power source switch, so as to allow the battery voltage value detecting module to be actuated to detect the battery voltage value of the battery unit.

14. The battery power management apparatus as claimed in claim 11, wherein the switch control module comprises a switch unit for allowing the user to set the conditions and determine whether the switch control module is to be actuated or not according to requirements.
